# FASCICULE DE BREVET EUROPEEN

(11) **EP 1 225 322 B1**
(45) Date de publication et mention de la délivrance du brevet: **01.02.2006**
(21) Numéro de dépôt: 01403059.7
(22) Date de dépôt: 29.11.2001
(51) Int. Cl.: F02C 7/00

(54) **Dispositif de centrage d'un tube dans un arbre de turbine**
Vorrichtung zum Zentrieren eines Rohres in einer Turbinenwelle
Apparatus to centre a tube in a turbine shaft

(30) Priorité: 30.11.2000 FR 0015473
(43) Date de publication de la demande: 24.07.2002
(73) Titulaire: SNECMA, 75015 Paris (FR)
(72) Inventeur: Galand, Christophe Emile, 77210 Samoreau (FR); Soupizon, Jean-Luc, 77000 Vaux le Penil (FR); Vache, Jean-Bernard, 76600 Le Havre (FR)

(56) Documents cités:
- US-A- 4 872 767
- US-A- 5 073 036
- US-A- 5 603 574

## Description

L'invention concerne un dispositif de centrage d'un tube ou d'une pièce à l'intérieur d'un arbre creux de turbine dans une turbomachine, ce tube ou cette pièce étant solidarisé en rotation audit arbre à ses extrémités, ce dispositif comportant un fourreau solidaire du tube ou de la pièce et entourant ce dernier, un anneau élastique interposé entre le fourreau et l'arbre et présentant des paires de patins qui s'étendent radialement vers l'extérieur, et des moyens pour permettre l'expansion de l'anneau après assemblage afin que les patins soient en appui contre la paroi intérieure de l'arbre.

Dans les turbomachines d'aviation, il est prévu coaxialement à l'intérieur de l'arbre central creux, qui relie la turbine basse pression au compresseur basse pression et éventuellement à la soufflante, un tube, qui permet la mise à l'air libre des enceintes avant et arrière des paliers qui supportent les rotors. Ce tube permet l'évacuation d'un débit d'air huilé.

Ce tube s'étend sur toute la longueur de l'arbre de turbine, et il comporte à ses extrémités des appuis qui le solidarisent en rotation à cet arbre. Ce tube très allongé a une paroi relativement mince, car il ne transmet aucun couple. Son moment d'inertie transversal est donc réduit. Dans ces conditions, si des balourds, même très faibles, existent, ces balourds sont préjudiciables au bon comportement de ce tube lors du fonctionnement de la turbomachine et peuvent entretenir des battements en flexion de ce tube, qui peuvent l'endommager, ainsi que les pièces adjacentes.

Pour éviter de tels incidents on dispose entre les deux appuis extrêmes du tube au moins un dispositif de centrage pour retenir coaxialement la zone médiane du tube à l'intérieur de l'arbre creux.

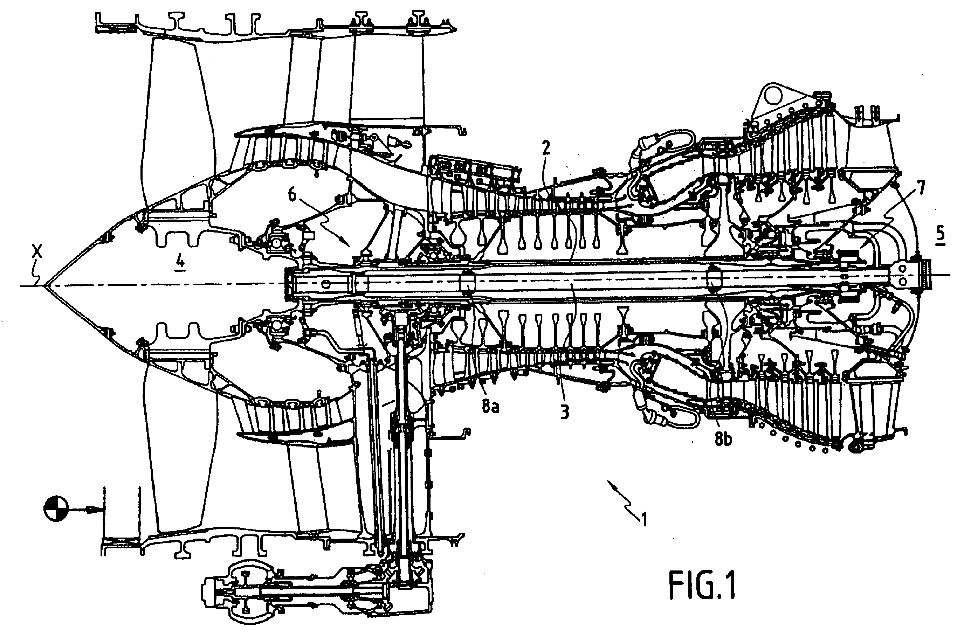

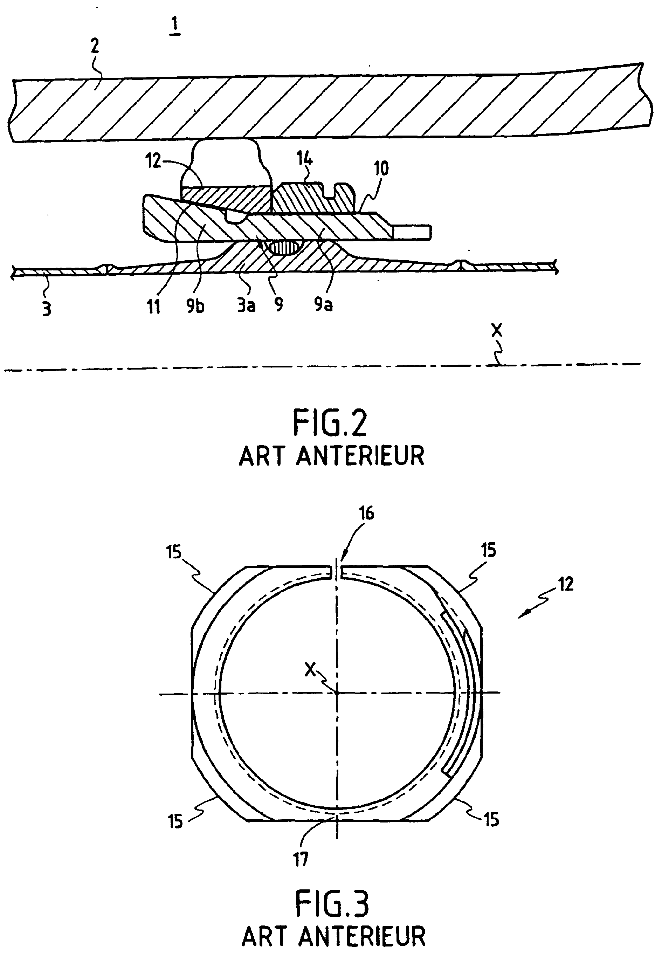

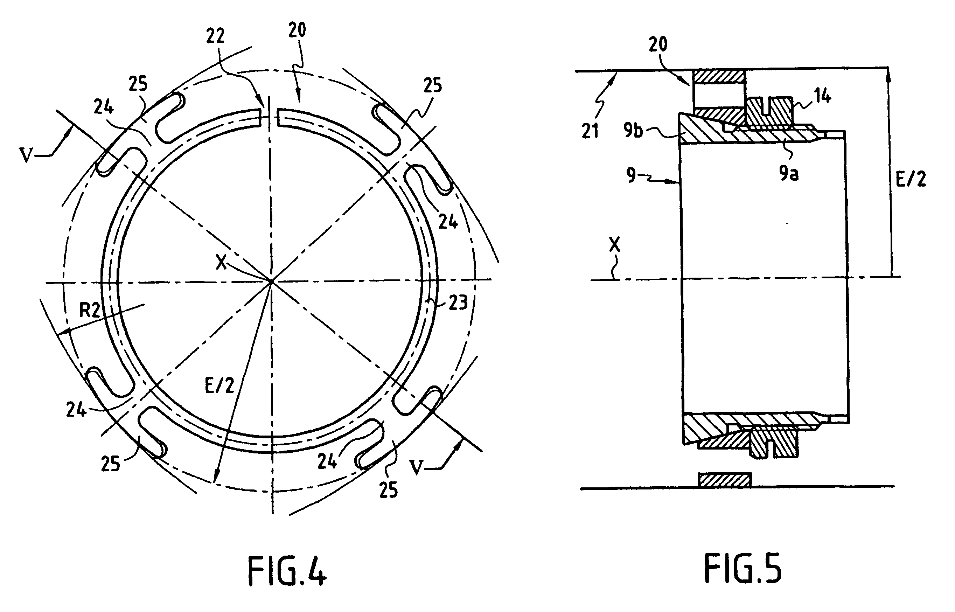

La figure 1 montre un turboréacteur d'aviation 1 d'axe X qui comporte à l'intérieur de l'arbre de turbine basse pression 2 un tube 3 d'axe X. Ce tube 3 permet la mise à l'air libre des enceintes avant 4 et arrière 5 des paliers avant 6 et arrière 7 qui supportent les rotors. Ce tube 3 est solidarisé en rotation à ses extrémités à l'arbre de turbine basse pression 2. Entre les extrémités du tube 3, il est prévu deux dispositifs de centrage 8a, 8b pour retenir coaxialement des parties du tube 3 à l'intérieur de l'arbre 2, et éviter ainsi la flexion du tube 3. La configuration des dispositifs de centrage 8a et 8b actuels est montrée sur les figures 2 et 3.

Le tube 3, à paroi mince, comporte une portion annulaire renforcée 3a, autour de laquelle est monté un fourreau 9 qui présente à une extrémité 9a un filetage extérieur 10 et à l'autre extrémité 9b une paroi périphérique conique 11 qui diverge dans le prolongement du filetage 10.

Un anneau élastique fendu 12, dont la paroi intérieur est également conique, est glissé par l'extrémité filetée 9a sur le fourreau 9. Un écrou 14 comportant un filetage intérieur adapté au filetage 10, fait progresser l'anneau 12 sur la paroi conique 11. Ce qui provoque l'expansion de l'anneau 12.

L'anneau élastique fendu 12, montré en détail sur la figure 3, présente une surface périphérique à section sensiblement carrée avec des coins 15 arrondis dont la courbure est adaptée en fonction du diamètre intérieur de l'arbre 2. Lors de l'expansion de l'anneau 12, les coins 15 viennent en appui contre la paroi intérieure de l'arbre 2.

L'anneau élastique 12 présente ainsi quatre patins rigides de grande section radiale, délimités extérieurement par les coins 15, et reliés deux à deux par des tronçons d'anneau de plus faible section radiale.

L'anneau élastique 12 présente une fente latérale 16 et se comporte comme l'ensemble de deux poutres montées en porte-à-faux et ayant leur encastrement dans la zone 17 diamétralement opposée à la fente 16. Le long de ces poutres, les valeurs du moment de flexion et de la flèche sont variables, les efforts d'appui ne sont donc pas les mêmes pour les quatre points d'appui. Il en résulte que les contraintes de contact entre l'anneau élastique 12 et l'arbre de turbine 2 sont aussi différentes le long des appuis.

Il arrive que ces valeurs de contraintes soient prohibitives, et alors des marquages ou empreintes peuvent survenir sur l'alésage intérieur de l'arbre de turbine 2, ce qui peut entraîner des conséquences très graves, du fait que cet arbre 2 est soumis à un couple de torsion considérable.

Le but de l'invention est de proposer un dispositif de rétention d'un tube à l'intérieur d'un arbre, tel que mentionné en introduction, qui évite le marquage de l'alésage de l'arbre.

Le but est atteint selon l'invention par le fait que les patins comportent des parois minces cylindriques et élastiques ayant au repos un diamètre extérieur légèrement différent du diamètre intérieur de l'arbre creux et épousant la paroi interne de l'arbre après assemblage.

Ainsi, la section radiale des patins selon l'invention, selon un plan contenant l'axe de rotation de la turbomachine est nettement diminuée par rapport à celle des patins de l'art antérieur. Cette disposition assure la répartition des efforts radiaux, dus au couple de serrage, sur une plus grande surface et réduit les contraintes de contact entre les patins et l'alésage de l'arbre de turbine.

Selon un premier mode de réalisation de l'invention, l'anneau est un anneau élastique fendu et les moyens pour permettre l'expansion de l'anneau après assemblage comportent un système de cône mâle/femelle formé sur le fourreau et l'anneau et un écrou assurant par serrage sur le fourreau le déplacement axial de l'anneau, son expansion radiale et la déformation des parois minces des patins.

Selon une première variante du premier mode de réalisation, l'anneau fendu comporte une paroi intérieure sensiblement cylindrique et chaque patin est relié par sa zone axiale médiane à ladite paroi intérieure cylindrique au moyen d'une paroi radiale et présente une lèvre flexible de chaque côté de ladite paroi radiale.

Dans cette première variante, le diamètre extérieur des patins au repos est supérieur au diamètre intérieur de l'arbre et décroît lors de l'assemblage.

Selon une deuxième variante, l'anneau fendu comporte plusieurs tronçons cylindriques alternant avec les patins, les extrémités de chaque patin étant encastrées respectivement sur les deux tronçons cylindriques adjacents.

Dans cette deuxième variante, le diamètre extérieur des patins au repos est inférieur au diamètre intérieur de l'arbre et croit lors de l'assemblage.

Selon un deuxième mode de réalisation de l'invention chaque patin comporte une paroi mince cylindrique ayant au repos un diamètre extérieur inférieur au diamètre intérieur de l'arbre, et, à chaque extrémité de la paroi mince, un corps en forme de secteur, et les corps sont retenus axialement par deux joncs élastiques pour former un anneau qui, au repos, a un diamètre intérieur inférieur au diamètre extérieur du fourreau.

Selon une première variante du deuxième mode de réalisation, le fourreau comporte un épaulement pour retenir axialement les corps sur une portion cylindrique de fourreau, et les corps présentent du côté de l'épaulement un chanfrein permettant l'expansion de l'anneau et des joncs lors du montage de l'anneau par serrage d'un écrou sur le fourreau.

Avantageusement il est prévu quatre patins régulièrement répartis autour de l'axe de rotation de la turbomachine.

Selon une autre variante du deuxième mode de réalisation, les moyens pour permettre l'expansion de l'anneau lors du montage comportent un système de cône mâle/femelle formé sur le fourreau et les corps et un écrou assurant par serrage sur le fourreau le déplacement axial des corps, l'expansion radiale des corps et des joncs, et la déformation des parois minces des patins.

Selon une autre caractéristique avantageuse de l'invention, au repos, le cercle circonscrit de l'ensemble des patins a un diamètre légèrement inférieur au diamètre intérieur de l'arbre, pour permettre la mise en place du dispositif dans l'alésage de l'arbre de turbine avant le montage du tube.

D'autres avantages et caractéristiques de l'invention ressortiront à la lecture de la description suivante faite à titre d'exemple et en référence aux dessins annexés dans lesquels :
la figure 1 est une coupe d'un turboréacteur qui montre la position du dispositif de centrage du tube disposé coaxialement à l'intérieur de l'arbre de turbine basse pression ;
la figure 2 est une vue en coupe d'un dispositif de centrage selon l'art antérieur ;
la figure 3 est une vue de face de l'anneau élastique fendu selon l'art antérieur ;
la figure 4 est une vue frontale de l'anneau élastique fendu selon la première variante du premier mode de réalisation de l' invention ;
la figure 5 est une coupe selon un plan radial passant par l'axe de rotation de la turbomachine du dispositif de centrage de l'invention selon une première variante d'un premier mode de réalisation, l'anneau fendu étant coupé selon la ligne V-V de la figure 4 ;
La figure 6 montre la configuration d'un patin selon la première variante avant l'assemblage ;
la figure 7 montre la configuration d'un patin après assemblage;
la figure 8 est une vue frontale d'un anneau élastique fendu selon une deuxième variante du premier mode de réalisation de l'invention ;
la figure 9 est une coupe selon un plan axial, passant par l'axe de rotation de la turbomachine, du dispositif de centrage de l'invention selon la deuxième variante de réalisation, l'anneau fendu étant coupé selon la ligne IX-IX de la figure 8 ;
la figure 10 montre le rayon extérieur du patin de la figure 8 avant et après assemblage ;
la figure 11 est une vue frontale d'un anneau élastique selon un deuxième mode de réalisation de l'invention, cet anneau comportant quatre patins indépendants retenus axialement par deux joncs élastiques ;
la figure 12 est une coupe selon un plan axial, passant par l'axe de rotation de la turbomachine, du dispositif de centrage selon le deuxième mode de réalisation à l'état assemblé, l'anneau étant coupé selon la ligne XII-XII de la figure 11;
la figure 13 montre en détail la variation du rayon extérieur des patins au cours de l'expansion de l'anneau de la figure 11; et
la figure 14 est semblable à la figure 12 et montre une variante de réalisation du système d'expansion de l'anneau.

Les figures 1 à 3 ont été commentées dans l'introduction et ne demandent pas d'explications supplémentaires.

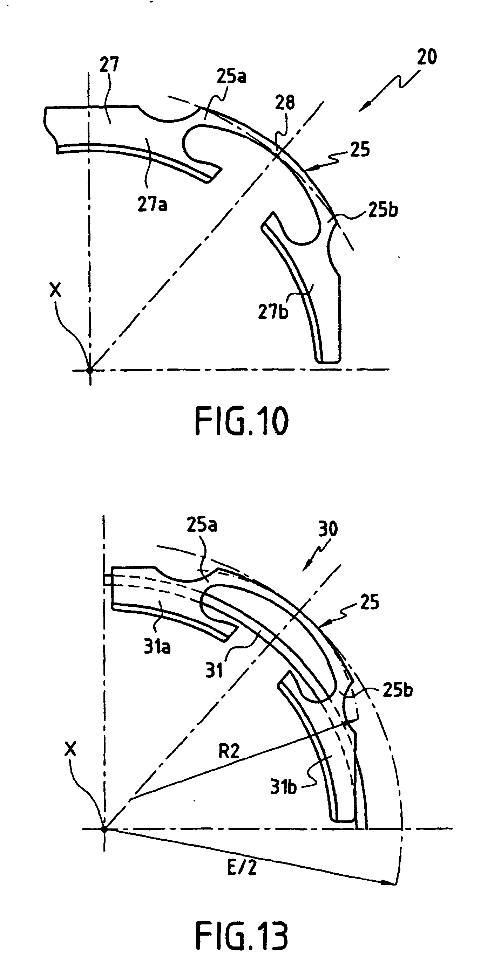

Selon l'invention, le tube 3 comporte, comme dans l'état antérieur, une portion annulaire renforcée, non montrée sur les figures 4 à 14, autour de laquelle est monté un fourreau 9 qui comporte une première extrémité filetée 9a et une deuxième extrémité 9b dans le prolongement de l'extrémité filetée 9a destinée à recevoir un anneau expansible 20. L'anneau 20 est retenu sur le fourreau 9 par un écrou 14 qui comporte un filetage intérieur coopérant avec le filetage de l'extrémité 9a du fourreau 9. L'anneau 20 est interposé entre le fourreau 9 et la paroi interne 21 de l'arbre de turbine 2. Sur les figures 4 à 14 seule la paroi interne 21 de l'arbre de turbine 2 est représentée par souci de clarté. Cette paroi interne 21 a un rayon E/2 au droit de l'anneau 20 après introduction du dispositif de centrage dans l'alésage de l'arbre de turbine 2 et montage du tube 3.

Selon un premier mode de réalisation de l'invention, l'anneau 20 présente une fente 22 comme dans l'art antérieur décrit en introduction.

Selon une première variante du premier mode de réalisation de l'invention, représentée sur les figures 4 à 7, l'anneau expansible 20 comporte une paroi intérieure 23 sensiblement cylindrique qui, après montage, entoure le fourreau 9.

Autour de la paroi intérieure 23 s'étendent, radialement vers l'extérieur dans des plans orthogonaux se coupant le long de l'axe de rotation X de la turbomachine, quatre parois radiales 24 ou plusieurs qui supportent à leurs extrémités des patins 25 à paroi mince et cylindrique.

Chaque patin 25 présente de chaque côté de la paroi radiale 24 de support, une lèvre flexible, respectivement 26a et 26b.

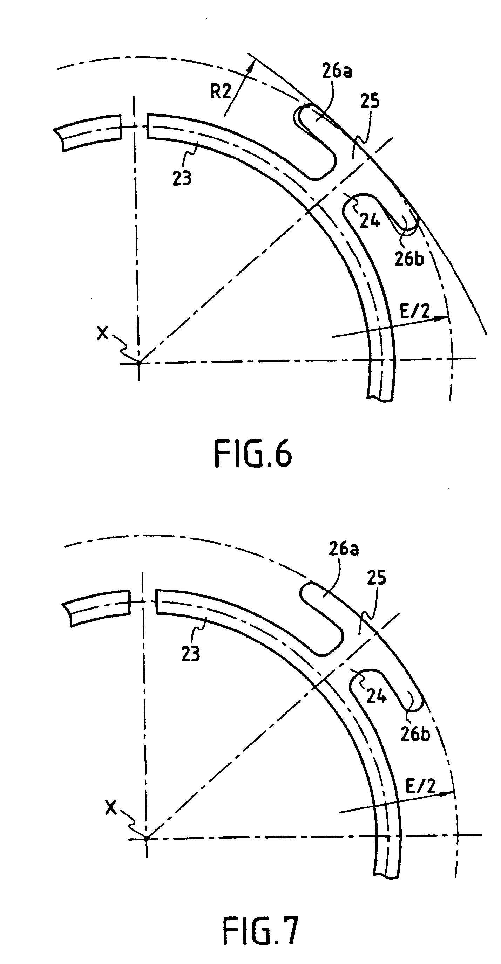

A l'état de repos des patins 25, montré sur la figure 6, le rayon extérieur R2 de leur paroi cylindrique est légèrement supérieur au rayon intérieur E/2 de l'arbre de turbine. Dans cette situation, le diamètre du cercle circonscrit aux quatre patins est supérieur au diamètre intérieur B de l'arbre de turbine.

Lors de l'assemblage, les extrémités des lèvres 26a et 26b seront fléchies au contact de l'alésage de l'arbre de turbine en serrant l'écrou 14. Dans la configuration assemblée montrée sur la figure 7, le rayon extérieur de la paroi cylindrique de chaque patin 25 devient égal au rayon E/2 de l'arbre de turbine. Chaque patin 25 est donc en appui homogène contre la paroi interne 21 sur toute sa surface extérieure.

Lors du serrage de l'écrou 14, l'anneau 20 glisse sur l'extrémité 9b du fourreau 9 et subit un expansion radiale vers l'extérieur, grâce à un système de cône mâle/femelle formé à la périphérie externe de l'extrémité de fourreau 9b et à la périphérie interne de l'anneau 20.

Pour monter le dispositif de centrage décrit ci-dessus dans l'arbre de turbine, on place l'anneau 20 et l'écrou 14 non serré sur le fourreau 9. On place l'ensemble dans l'arbre de turbine. On exerce un couple de serrage au moyen de l'écrou 14 afin que les zones axiales médianes des patins 25 soient situées à une distance E/2 de l'axe X, ce qui fait fléchir les lèvres 26a et 26b. On monte ensuite le tube 3.

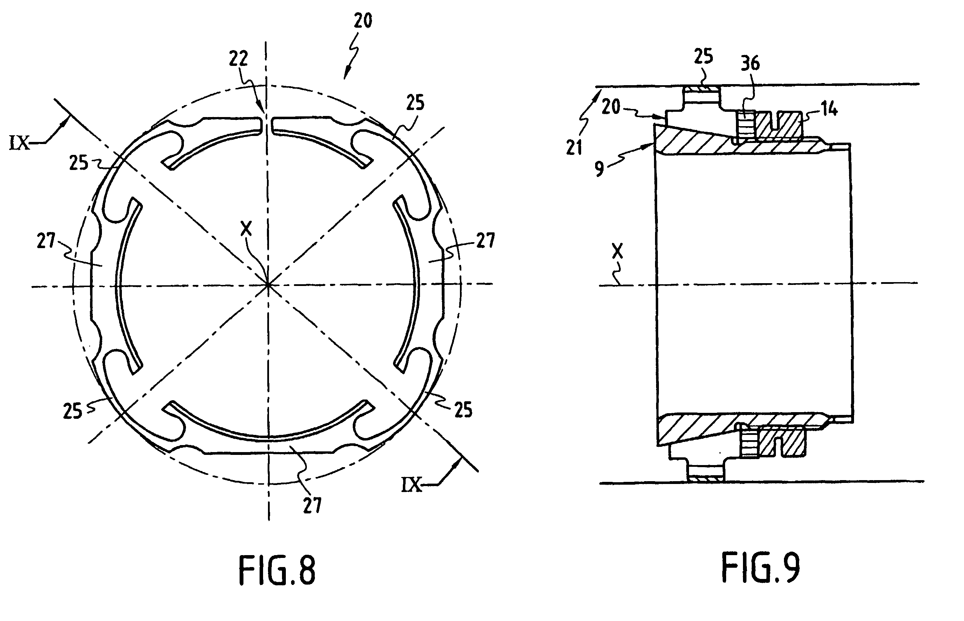

Selon une deuxième variante du premier mode de réalisation de l'invention, montrée sur les figures 8 à 10, qui diffère de la première variante décrite ci-dessus uniquement par la géométrie de l'anneau 20, les quatre patins 25, qui viennent en appui contre la paroi interne 21 de l'arbre de turbine, sont formés par des parois cylindriques minces qui, au repos, ont un rayon extérieur R2 inférieur au rayon intérieur E/2 de l'arbre de turbine.

La partie radialement intérieure de l'anneau 20 comporte plusieurs tronçons cylindriques 27 espacés circonférentiellement l'un de l'autre et alternant avec les patins 25.

Les extrémités 25a et 25b de chaque patin 25 sont encastrées respectivement sur deux tronçons 27 adjacents. Une fente 22 est ménagée dans l'un des tronçons 27.

L'expansion de cet anneau 20 sur le fourreau 9 par le système à cône et serrage de l'écrou 14 entraîne une augmentation du rayon du cercle circonscrit aux quatre patins 25 à l'état de repos.

Le montage de cette deuxième variante du dispositif de centrage dans l'arbre de turbine est identique à celui de la première variante décrite ci-dessus. Les zones médianes 28 des patins fléchissent lorsqu'on exerce un couple de serrage au moyen de l'écrou 14 ce qui entraîne une augmentation du rayon R2, jusqu' à ce que le rayon extérieur des patins soit égal au rayon E/2 de l'arbre de turbine. On monte ensuite le tube 3.

Les surfaces d'appui des patins 25 contre la paroi interne 21 de l'arbre de turbine sont considérablement augmentées par rapport à celles de l'art antérieur décrit en introduction, dans lequel les patins sont des blocs rigides indéformables alternant avec des tronçons de raccordement à section plus réduite.

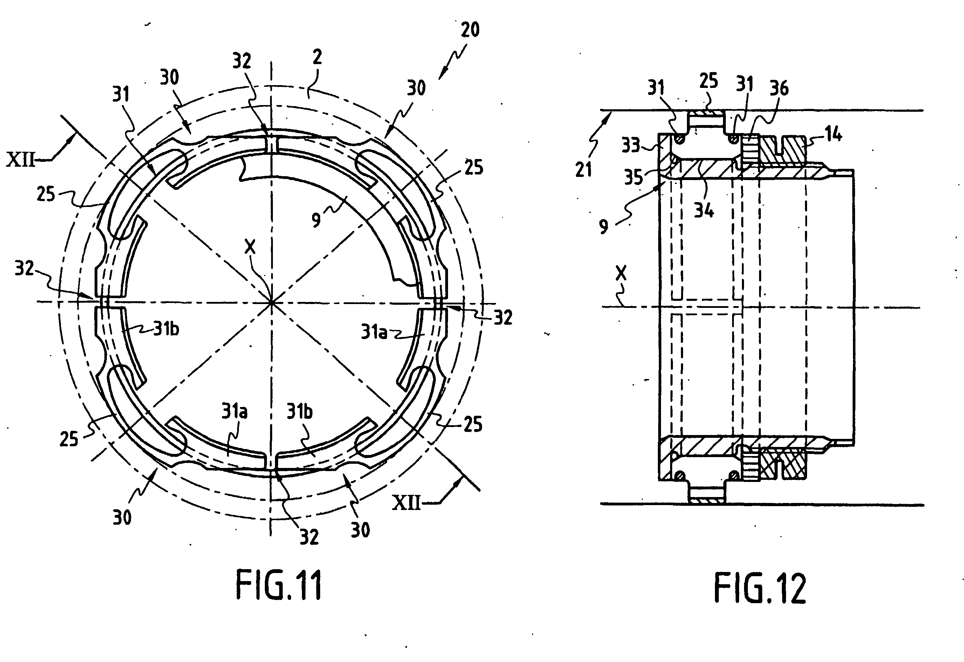

Selon un deuxième mode de réalisation de l'invention, illustré par les figures 11 à 14, l'anneau élastique 20 est constitué par quatre éléments identiques 30 indépendants assemblés au moyen de deux joncs annulaires élastiques 31.

Chaque élément 30 comporte dans sa région médiane un patin 25 constitué d'une paroi mince cylindrique dont le rayon extérieur R2 est inférieur au rayon E/2 de l'arbre de turbine. Les extrémités 25a et 25b de chaque patin 25 sont encastrés respectivement sur deux corps 31a et 31b qui forment les parties latérales et radialement intérieures d'un élément 30. Les blocs 31a, 31b ont la forme d'un secteur de cercle.

Chaque ensemble 30 se présente ainsi sous la forme d'un secteur qui s'étend sur 90° au plus.

Les quatre éléments 30 sont assemblés entre eux au moyen de deux joncs 31 qui logent dans des gorges ménagées sur la paroi périphérique externe des corps 31a et 31b, l'une des gorges étant prévue près de la face avant de l'anneau 20 et l'autre près de sa face arrière.

Des interstices 32 séparent les quatre éléments 30 retenus par les joncs 31. Ces interstices 32 s'élargissent lorsque l'anneau 20 est expansé.

La figure 12 montre une variante de réalisation du montage de l'anneau 20, décrit ci-dessus, sur le fourreau 9. Ce dernier comporte un épaulement 33 qui s'étend radialement vers l'extérieur, contre lequel vient appuyer une face frontale de l'anneau 20. L'anneau 20 recouvre une portion cylindrique 34 de fourreau, qui a un diamètre supérieur au diamètre extérieur de l'extrémité filetée 9a et supérieur au diamètre intérieur de l'anneau 20 avant son montage sur le fourreau 9. Les corps 31a et 31b présentent, du côté de l'épaulement 33, un chanfrein 35 qui permet l'expansion de l'anneau 20 et des joncs 31 lorsque l'anneau monte sur la partie cylindrique 34 par suite du serrage de l'écrou 14.

Dans cette configuration de repos, le cercle circonscrit aux quatre patins 25 a un rayon inférieur au rayon intérieur E/2 de l'arbre de turbine. Lorsque le tube sera en place dans l'arbre de turbine, les zones axiales médianes 28 des patins 25 seront fléchies et le rayon extérieur des patins 25 sera sensiblement égal au rayon intérieur E/2 de l'arbre de turbine.

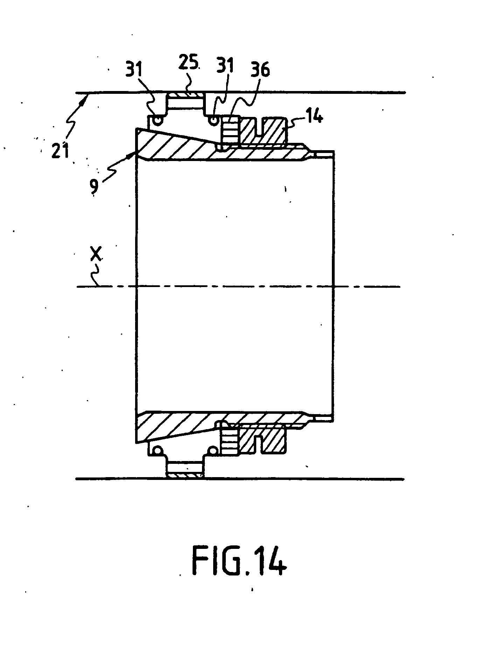

La figure 14 montre une autre variante de réalisation du montage de l'anneau 20 sur le fourreau 9. Comme dans le premier mode de réalisation de l'invention, le fourreau 9 et les corps 31a et 31b comportent un système de cône mâle/femelle qui permet l'expansion de l'anneau 20 et des joncs 31 lorsqu'on exerce un couple de serrage sur l'écrou 14.

Une rondelle 36 peut naturellement être interposée entre l'anneau 20 et l'écrou 14 dans tous les modes ou variantes de réalisation décrits ci-dessus.

Dans la description faite ci-dessus, il est prévu quatre patins 25 sur chaque anneau expansible 20. Le nombre de patins peut évidemment être différent, et de préférence ce nombre est pair. Ce qui importe surtout, c'est que ces patins soient régulièrement répartis autour de l'axe de rotation X de la turbine.

Du fait que les patins 25 sont constitués par des parois cylindriques minces et déformables, les surfaces d'appui de ces patins sont relativement élevées, et les efforts sont répartis sur une grande surface, sans créer des contraintes de contacts prohibitifs entre le dispositif de centrage et l'alésage de l'arbre de turbine. Ceci évite des marquages sur l'arbre de turbine.

En outre, le deuxième mode de réalisation de l'invention permet une meilleure répartition des efforts sur tous les patins, du fait de la symétrie.

## Revendications

1. Agencement d'arbre de turbomachine comprenant un arbre (2) creux, un tube (3) ou une pièce disposé à l'intérieur de l'arbre (2) et solidarisé en rotation avec ce dernier à ses extrémités, un dispositif de centrage du tube (3) ou de la pièce à l'intérieur de l'arbre, ce dispositif comportant un fourreau (9) solidaire dudit tube (3) où de ladite pièce et entourant ce dernier, un anneau élastique (20) interposé entre le fourreau (9) et l'arbre (2) et présentant des paires de patins qui s'étendent radialement vers l'extérieur, et des moyens pour permettre l'expansion de l'anneau (20) après l'assemblage du dispositif afin que lesdits patins soient en appui contre la paroi intérieure de l'arbre, **caractérisé par le fait que** les patins sont constitués par des parois minces (25) élastiques, le diamètre du cercle circonscrit aux patins étant, au repos, légèrement différent du diamètre intérieur de l'arbre (2) creux, les parois minces épousant la paroi interne (21) de l'arbre (2) après assemblage.

2. Agencement d'arbre selon la revendication 1, **caractérise par le fait que** l'anneau (20) est un anneau élastique fendu et les moyens pour permettre l'expansion de l'anneau (20) après assemblage comportent un système de cône mâle/femelle formé sur le fourreau (9) et l'anneau (20) et un écrou (14) assurant par serrage sur le fourreau (9) le déplacement axial de l'anneau (20), son expansion radiale, et la déformation des parois minces des patins.

3. Agencement d'arbre selon la revendication 2, **caractérisé par le fait que** l'anneau (20) comporte une paroi intérieure (23) sensiblement cylindrique et chaque patin est relié par sa zone axiale médiane à ladite paroi intérieure (23) cylindrique par une paroi radiale (24) et présente une lèvre flexible (26a, 26b) de chaque côté de ladite paroi radiale (24).

4. Agencement d'arbre selon la revendication 3, **caractérisé par le fait que** le diamètre extérieur des patins (25) au repos est supérieur au diamètre intérieur de l'arbre (2) et décroît lors de l'assemblage.

5. Agencement d'arbre selon la revendication 2, **caractérisé par le fait que** l'anneau (20) comporte plusieurs tronçons (27) cylindriques aliène avec les patins (25), les extrémités (25a, 25b) de chaque patin (25) étant encastrées respectivement sur les deux tronçons (27) cylindriques adjacents.

6. Agencement d'arbre selon la revendication 5, **caractérisé par le fait que** le diamètre extérieur des patins (25) au repos est inférieur au diamètre intérieur de l'arbre (2) et croit lors de l'assemblage.

7. Agencement d'arbre selon la revendication 1, **caractérisé par le fait que** chaque patin (25) comporte une paroi mince cylindrique ayant au repos un diamètre extérieur inférieur au diamètre intérieur de l'arbre (2), et, à chaque extrémité de ladite paroi mince, un corps (31a, 31b) en forme de secteur, et **par le fait que** lesdits corps (31a, 31b) sont retenus axialement par deux joncs élastiques (31) pour former un anneau (20) qui, au repos, a un diamètre intérieur inférieur au diamètre extérieur du fourreau (9).

8. Agencement d'arbre selon la revendication 7, **caractérisé par le fait que** le fourreau (9) comporte un épaulement (33) pour retenir axialement les corps (31a, 31b) sur une portion cylindrique (34) de fourreau (9), lesdits corps (31a, 31b) présentant du côté de l'épaulement (33) un chanfrein (35) permettant l'esxpansion de l'anneau (20) et des joncs (31) lors du montage de l'anneau (20) par serrage d'un écrou (14) sur le fourreau (9).

9. Agencement d'arbre selon la revendication 7, **caractérise par le fait que** les moyens pour permettre l'expansion de l'anneau (20) lors du montage comportent un système de cône mâle/femelle formé sur le fourreau (9) et les corps (31a, 31b) et un écrou (14) assurant par serrage sur le fourreau (9) le déplacement axial des corps (31a, 31b), l'expansion radiale des corps (31a, 31b) et des joncs (31), et la déformation des parois minces des patins (25).

10. Agencement d'arbre selon l'une des revendications 1 à 9, par le fait qu'au repos le cercle circonscrit de l'ensemble des patins (25) a un diamètre légèrement inférieur au diamètre intérieur de l'arbre (2).

11. Agencement d'arbre selon l'une quelconque des revendications 1 à 10, **caractérisé par le fait qu'**il comporte quatre patins (25) régulièrement répartis autour de l'axe de rotation (X) de la turbomachine.

## Claims

1. Turbomachine shaft arrangement comprising a hollow shaft (2), a tube (3) or a component positioned inside the shaft (2) and rotationally secured to the latter at its ends, a device for centring the tube (3) or the component within the shaft, this device comprising a sleeve (9) secured to the said tube (3) or to the said component and surrounding the latter, an elastic ring (20) interposed between the sleeve (9) and the shaft (2) and exhibiting pairs of shoes which extend radially outwards, and means for allowing the ring (20) to be expanded after the device has been assembled so that the said shoes bear against the interior wall of the shaft, **characterized in that** the shoes are formed of elastic thin walls (25), the diameter of the circle circumscribing the shoes being, at rest, slightly different from the inside diameter of the hollow shaft (2), the thin walls hugging the internal wall (21) of the shaft (2) after assembly.

2. Shaft arrangement according to Claim 1, **characterized in that** the ring (20) is a split elastic ring and the means for allowing the ring (20) to expand after assembly comprise a male/female taper system formed on the sleeve (9) and the ring (20) and a nut (14) which, by being tightened onto the sleeve (9), causes the axial displacement of the ring (20), its radial expansion, and the deformation of the thin walls of the shoes.

3. Shaft arrangement according to Claim 2, **characterized in that** the ring (20) comprises a more or less cylindrical interior wall (23) and each shoe is connected by its central axial region to the said cylindrical interior wall (23) via a radial wall (24) and exhibits a flexible lip (26a, 26b) on each side of the said radial wall (24).

4. Shaft arrangement according to Claim 3, **characterized in that** the outside diameter of the shoes (25) at rest is greater than the inside diameter of the shaft (2) and decreases at the time of assembly.

5. Shaft arrangement according to Claim 2, **characterized in that** the ring (20) comprises several cylindrical sections (27) alternating with the shoes (25), the ends (25a, 25b) of each shoe (25) being set respectively into the two adjacent cylindrical sections (27).

6. Shaft arrangement according to Claim 5, **characterized in that** the outside diameter of the shoes (25) at rest is smaller than the inside diameter of the shaft (2) and increases at the time of assembly.

7. Shaft arrangement according to Claim 1, **characterized in that** each shoe (25) comprises a cylindrical thin wall having, at rest, an outside diameter smaller than the inside diameter of the shaft (2) and, at each end of the said thin wall, a body (31a, 31b) in the shape of a sector, and **in that** the said bodies (31a, 31b) are axially retained by two elastic snap rings (31) to form a ring (20) which, at rest, has an inside diameter smaller than the outside diameter of the sleeve (9).

8. Shaft arrangement according to Claim 7, **characterized in that** the sleeve (9) has a shoulder (33) for axially retaining the bodies (31a, 31b) on a cylindrical portion (34) of the sleeve (9), the said bodies (31a, 31b) having, on the same side as the shoulder (33), a chamfer (35) allowing the ring (20) and the snap rings (31) to expand as the ring (20) is being mounted through the tightening of a nut (14) onto the sleeve (9).

9. Shaft arrangement according to Claim 7, **characterized in that** the means for allowing the ring (20) to expand during the mounting comprise a male/female taper system formed on the sleeve (9) and the bodies (31a, 31b) and a nut (14) which, by being tightened onto the sleeve (9), causes the axial movement of the bodies (31a, 31b), the radial expansion of the bodies (31a, 31b) and of the snap rings (31) and the deformation of the thin walls of the shoes (25).

10. Shaft arrangement according to one of Claims 1 to 9, **characterized in that**, at rest, the circle circumscribing the collection of shoes (25) has a diameter slightly smaller than the inside diameter of the shaft (2).

11. Shaft arrangement according to any one of Claims 1 to 10, **characterized in that** it comprises four shoes (25) uniformly distributed about the axis of rotation (X) of the turbomachine.

## Patentansprüche

1. Turbinen-Maschinen-Wellen-Anordnung, umfassend: eine hohle Welle (2), ein Rohr (3) oder ein im Inneren der Welle (2) angeordnetes, und bei Rotation mit letzterer an seinen/ihren Enden verbundenes Teil, eine Vorrichtung zum Zentrieren des Rohrs (3) oder des Teils im Inneren der Welle, wobei die Vorrichtung umfasst: eine Hülse (9), welche mit dem Rohr (3) oder dem Teil verbunden ist, und letzteres umgibt, einen elastischen Ring (20), welcher zwischen der Hülse (9) und der Welle (2) angeordnet ist, und sich radial nach Außen erstreckende Kufen-Paare aufweist, und Vorrichtungen, um nach dem Zusammenbau der Vorrichtung die Expansion des Ringes (20) zu ermöglichen, damit die Kufen an der Innenwand der Welle anliegen,
**dadurch gekennzeichnet, dass** die Kufen aus dünnen elastischen Wänden (25) bestehen, wobei der Durchmesser des den Kufen umschriebenen Kreises im entspannten Zustand leicht von dem Innen-Durchmesser der hohlen Welle (2) abweicht, wobei die dünnen Wände nach dem Zusammenbau die Innenwand (21) der Welle (2) berühren.

2. Wellen-Anordnung gemäß Anspruch 1, **dadurch gekennzeichnet, dass** der Ring (20) ein geschlitzter elastischer Ring ist, und dass die Vorrichtungen zum Ermöglichen der Expansion des Ringes (20) nach dem Zusammenbau ein an der Hülse (9) und dem Ring (20) ausgebildetes männlich/weibliches Kegel-System und eine Mutter (14) umfassen, welche mittels Festziehen auf der Hülse (9) das axiale Verschieben des Ringes (20), seine radiale Expansion und die Deformation der dünnen Wände der Kufen sicherstellen.

3. Wellen-Anordnung gemäß Anspruch 2, **dadurch gekennzeichnet, dass** der Ring (20) eine im Wesentlichen zylindrische Innenwand (23) umfasst, und dass jede Kufe in ihrer axialen Mittel-Zone mittels einer radialen Wand (24) mit der zylindrischen Innenwand (23) verbunden ist, und an jeder Seite der radialen Wand (24) eine flexible Lippe (26a, 26b) aufweist.

4. Wellen-Anordnung gemäß Anspruch 3, **dadurch gekennzeichnet, dass** der Außen-Durchmesser der Kufen (25) im entspannten Zustand größer ist als der Innen-Durchmesser der Welle (2) und beim Zusammenbau abnimmt.

5. Wellen-Anordnung gemäß Anspruch 2, **dadurch gekennzeichnet, dass** der Ring (20) mehrere zylindrische Teile (27) umfasst, welche sich mit den Kufen (25) abwechseln, wobei die Enden (25a, 25b) jeder Kufe (25) jeweils in die zwei benachbarten zylindrischen Teile (27) einmünden.

6. Wellen-Anordnung gemäß Anspruch 5, **dadurch gekennzeichnet, dass** der Außen-Durchmesser der Kufen (25) im entspannten Zustand kleiner ist als der Innen-Durchmesser der Welle (2), und beim Zusammenbau wächst.

7. Wellen-Anordnung gemäß Anspruch 1, **dadurch gekennzeichnet, dass** jede Kufe (25) eine dünne zylindrische Wand umfasst, welche im entspannten Zustand einen Außen-Durchmesser aufweist, welcher kleiner ist als der Innen-Durchmesser der Welle (2), und an jedem Ende der dünnen Wand einen Körper (31a, 31b) von Sektor-Form aufweist, und **dadurch**, dass diese Körper (31a, 31b) von zwei Federringen (31) axial gehaltert sind, um einen Ring (20) auszubilden, welcher im entspannten Zustand einen Innen-Durchmesser aufweist, welcher kleiner ist als der Außen-Durchmesser der Hülse (9).

8. Wellen-Anordnung gemäß Anspruch 7, **dadurch gekennzeichnet, dass** die Hülse (9) einen Flansch (33) zum axialen Haltern der Körper (31a, 31b) auf einem zylindrischen Abschnitt (34) der Hülse (9) umfasst, wobei die Körper (31a, 31b) an der Seite des Flansches (33) eine Abschrägung (35) aufweisen, welche bei der Montage des Rings (20) mittels Festziehens einer Mutter (14) auf der Hülse (9) die Expansion des Rings (20) und der Federringe (31) ermöglicht.

9. Wellen-Anordnung gemäß Anspruch 7, **dadurch gekennzeichnet, dass** die Vorrichtungen zum Ermöglichen der Expansion des Ringes (20) bei der Montage ein auf der Hülse (9) und den Körpern (31a, 31b) ausgebildetes männlich/weibliches Kegel-System und eine Mutter (14) umfassen, welche mittels Festziehens auf der Hülse (9) die axiale Verschiebung der Körper (31a, 31b), die radiale Expansion der Körper (31a, 31b) und der Federringe (31), und die Deformation der dünnen Wände der Kufen (25) sicherstellt/sicherstellen.

10. Wellen-Anordnung gemäß einem der Ansprüche 1 bis 9, **dadurch gekennzeichnet, dass** im entspannten Zustand der der Gesamtanordnung3 der Kufen (25) umschriebene Kreis einen Durchmesser aufweist, welcher etwas kleiner ist als der Innen-Durchmesser der Welle (2).

11. Wellen-Anordnung gemäß einem der Ansprüche 1 bis 10, **dadurch gekennzeichnet, dass** sie vier Kufen (25) umfasst, welche rings der Rotations-Achse (X) der Turbinen-Maschine regelmäßig verteilt sind.
